Europäisches Patentamt

European Patent Office

Office européen des brevets

(11) Publication number: **0 219 462**
A2

## EUROPEAN PATENT APPLICATION

(21) Application number: 86830144.1

(22) Date of filing: 28.05.86

(51) Int. Cl.⁴: **A 23 G 9/02**

(30) Priority: 20.09.85 IT 2900785

(43) Date of publication of application:
22.04.87 Bulletin 87/17

(84) Designated Contracting States:
AT BE CH DE FR GB LI LU NL SE

(71) Applicant: ITALGEL S.P.A.
Viale Mentana, 43
I-43100 Parma(IT)

(72) Inventor: Ambrogi, Mario
Via Mattei, 10
Parma(IT)

(74) Representative: Lanzoni, Luciano
c/o BUGNION S.p.A. Viale Trento Trieste, 25
I-41100 Modena(IT)

(54) A sweet featuring ice cream on an oven baked pastry base.

(57) The invention relates to a sweet which combines ice cream with an oven baked pastry base, the essential feature of which is that the base (1) is fashioned from short pastry, and provides a support with which the filling of icecream (4) makes direct contact.

EP 0 219 462 A2

A sweet featuring ice cream on an oven baked pastry
base

The invention described herein relates to a sweet
which features ice cream on an oven baked pastry
base.

The object of the invention is to create a packaged
sweet the main feature of which is that it combines
a base of short pastry, and a filling of ice cream
in direct contact with the base.

A preferred embodiment of the invention will now be
described in detail with the aid of the accompanying
drawing, which shows a vertical section through the
centre of the sweet.

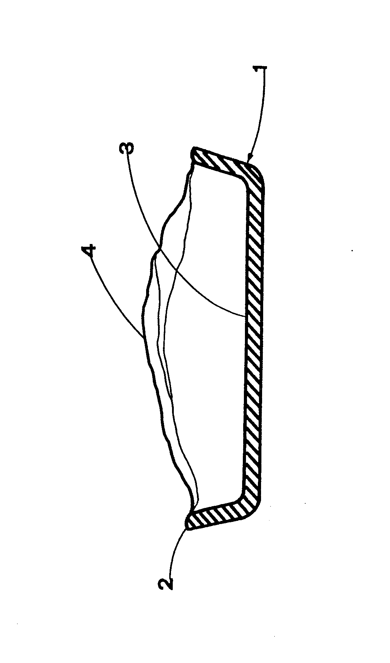

With reference to the drawing, 1 denotes a base of
oven baked pastry, which in the preferred embodiment
is short pastry. The base 1 exhibits a peripheral
outer edge 2 which is raised in relation to the surface of the central area 3 in such a way as to form
a cup in which the ice cream filling 4 is contained.
The base 1 therefore provides a support onto which
the entire ice cream filling 4 is deposited direct.
The sweet thus embodied is ideally suited to packaging and preserving methods used in the preparation
of ice cream, since that crumbly quality typical of
short pastry is maintained intact and undamaged by
the oven baked base 1 when frozen. Needless to say,
any shape might be selected ultimately for the base,

2

0219462

provided that the requisite space is made available for the ice cream filling. Similarly, a sweet of the type might be packaged in individual format, or as a tart to be cut and served in slices.

Claims

1)    A sweet featuring ice cream on an oven baked pastry
      base, characterized in that it comprises an oven
      baked base (1) of pastry, in particular short pastry,
      that provides a support with which the ice cream
      filling (4) makes direct contact.

2)    Sweet as in claim 1, wherein the base (1) exhibits a
      peripheral outer edge (2) that is raised in relation
      to the surface of the central area (3) in such a way
      as to form a cup in which the ice cream filling (4)
      is contained.

3)    Sweet as in claim 1, wherein the oven baked base (1)
      consists of short pastry that possesses the property
      of maintaining its typical crumbly quality intact,
      even when frozen.

4)    Sweet as in claim 1, the manufacture of which features packaging in individual format.